Europäisches Patentamt

European Patent Office

Office européen des brevets

(19)

(11) Veröffentlichungsnummer: 0 202 682
A2

# (12) EUROPÄISCHE PATENTANMELDUNG

(21) Anmeldenummer: 86106980.5

(22) Anmeldetag: 22.05.86

(51) Int. Cl.⁴: F 01 L 1/34

(30) Priorität: 22.05.85 DE 3518364

(43) Veröffentlichungstag der Anmeldung:
26.11.86 Patentblatt 86/48

(84) Benannte Vertragsstaaten:
AT FR GB SE

(71) Anmelder: BAYERISCHE MOTOREN WERKE
Aktiengesellschaft
Postfach 40 02 40 Petuelring 130
D-8000 München 40(DE)

(72) Erfinder: Srdic, Dragoljub
Zieblandstrasse 11
D-8000 München 40(DE)

(72) Erfinder: Gaede, Georg
Osterwaldstrasse 141
D-8000 München 40(DE)

(72) Erfinder: Haberl, Alois
Feldstrasse 10 c
D-8081 Jesenwang(DE)

(72) Erfinder: Klering, Martin
Appenzellerstrasse 98
D-8000 München 71(DE)

(74) Vertreter: Bücken, Helmut
Bayerische Motoren Werke Aktiengesellschaft Postfach
40 02 40 Petuelring 130 - AJ-30
D-8000 München 40(DE)

(54) Vorrichtung zur relativen Drehlagenänderung einer Steuerwelle, insbesondere von einer Kurbelwelle einer Brennkraftmaschine angetriebenen Steuerwelle, vor allem für Gaswechselventile.

(57) Eine Vorrichtung zur relativen Drehlagenänderung einer insbesondere von einer Kurbelwelle einer Brennkraftmaschine angetriebenen Steuerwelle 2, vor allem zur Betätigung von Gaswechselventilen, umfaßt eine mit einem Antriebsrad 3 der Steuerwelle 2 kombinierte Verstellanordnung 4, die mittels einer baulich gesonderten, am Gehäuse der Brennkraftmaschine angeordneten Betätigungsanordnung 13 steuerbar ist.

Für die Beibehaltung eines einfachen Antriebes der Steuerwelle 2, für eine reduzierte Antriebsleistung in der Betätigungsanordnung 13 durch Verringerung der an der Steuerwelle 2 auftretenden Wechselmomente sowie zur Erzielung einer körperschallentkoppelten Anordnung wird die Betätigungsanordnung 13 an einem Deckel 14 des Gehäuses 1 angeordnet und steht mit der Steuerwelle 2 in elastisch nachgiebiger Verbindung.

Fig. 3

EP 0 202 682 A2

Vorrichtung zur relativen Drehlagenänderung einer Steuerwelle, insbesondere von einer Kurbelwelle einer Brennkraftmaschine angetriebenen Steuerwelle, vor allem für Gaswechselventile

Die Erfindung geht gemäß dem Oberbegriff des unabhängigen Patentanspruches von der DE-A 31 46 613 aus.

Bei dieser bekannten Vorrichtung ist am freien Ende einer Steuerwelle ein schrägverzahntes Antriebsrad axial verschiebbar angeordnet. Die über die Schrägverzahnung bei der axialen Verlagerung des Antriebsrades bewirkte Drehlagenveränderung der Steuerwelle wird über eine am Maschinengehäuse angeordnete Betätigungsanordnung ausgelöst. Die Betätigungsanordnung umfaßt einen elektrischen Stellmotor, der über ein Schneckengetriebe auf ein Ritzel einwirkt, das mit einer einen Zahnstangenabschnitt aufweisenden und am Antriebsrad der Steuerwelle lediglich axial fixierten Hülse zusammenwirkt. Die an der Steuerwelle für die Gaswechselventile auftretenden Wechselmomente werden bei dieser bekannten Anordnung über die Schrägverzahnung des Antriebsrades der Steuerwelle in der Betätigungsanordnung wirksam. Zum einen ergibt sich im Getriebesatz der Betätigungsanordnung ein erhöhter Verschleiß. Zum anderen wirkt der Getriebesatz der bekannten Betätigungsanordnung zwischen der Steuerwelle und dem an der Außenseite des Maschinengehäuses angeordneten Teil der Betätigungsanordnung als Körperschallbrücke, wobei die außenliegenden Teile der Betätigungsanordnung den Körperschall nach außen abstrahlen.

Weiter ist aus der DE-A 28 42 154 eine Vorrichtung zur relativen Drehlagenänderung einer von einer Kurbelwelle einer Brennkraftmaschine angetriebenen Steuerwelle für Gaswechselventile bekannt, bei der der Antrieb der Steuerwelle ebenfalls mit einer Verstellanordnung kombiniert ist. Die Verstellanordnung ist im wesentlichen als ein Planetengetriebe ausgebildet, wobei eines der Planetengetriebeelemente mit einem selbsthemmenden Getriebe einer Betätigungsanordnung zusammenwirkt. Bei dieser bekannten Bauart werden die an der Steuerwelle für Gaswechselventile einer Brennkraftmaschine auftretenden Wechselmomente unmittelbar über das selbsthemmende Getriebe der Betätigungsanordnung aufgenommen. Hierbei bestimmen die Spitzenwerte dieser Wechselmomente das von der Betätigungsanordnung aufzubringende Antriebsmoment bzw. die Antriebsleistung. Bei einem elektrischen Stellmotor für jede der vorgenannten Betätigungsanordnungen wird dessen Bauvolumen im wesentlichen durch die Antriebsleistung bestimmt.

Der Erfindung liegt die Aufgabe zugrunde, eine Vorrichtung der eingangs genannten Art so weiterzubilden, daß ein einfacher Antrieb der Steuerwelle, eine reduzierte Antriebsleistung der Betätigungsanordnung sowie eine körperschallentkoppelte Anordnung erreicht ist.

Diese Aufgabe wird durch die kennzeichnenden Merkmale des unabhängigen Patentanspruches gelöst. Mit dem ersten Kennzeichenmerkmal kann ein mit der Verstellanordnung zusammenwirkendes Betätigungsorgan gleichachsig zur Steuerwelle der Brennkraftmaschine angeordnet werden, wodurch in vorteilhafter Weise die bekannten, kurzbauenden Antriebe mit endlosen Zugmitteln für die Steuerwelle Verwendung finden bzw. beibehalten werden können. Nach dem ersten Teil des zweiten Kennzeichenmerkmals werden die Spitzenwerte der von der Steuerwelle herrührenden Wechselmomente in der elastisch nachgiebigen Verbindung reduziert, so daß für die Betätigungsanordnung ein elektrischer Stellmotor von kleinerer Leistung und damit kleinerem Bauvolumen gewählt werden kann.

3

Mit der geringeren Antriebsleistung wird das Bordnetz eines Kraftfahrzeuges wesentlich geringer belastet, was insbesondere bei einer nach einem Brennkraftmaschinen-Kennfeld stufenlos gesteuerten Verstellung der Steuerwelle für Gaswechselventile oder Kraftstoffeinspritzpumpen von wesentlicher Bedeutung ist. Mit dem zweiten Teil des zweiten kennzeichnenden Merkmales wird je nach Ausgestaltung der elastisch nachgiebigen Verbindung zwischen der Steuerwelle und der Betätigungsanordnung für diese eine zusätzliche oder gesonderte Körperschallentkoppelung durch eine elastisch nachgiebige Verbindung mit dem Deckel erzielt.

Weitere vorteilhafte Ausgestaltungen sind in den Unteransprüchen beschrieben. Im Hinblick auf die elastisch nachgiebige Verbindung zwischen der Betätigungsanordnung und dem Deckel kann diese nach Anspruch 2 beispielsweise so gestaltet sein, daß eine im Deckel abgestützte Welle eines Stellgetriebes über beispielsweise gummielastische Büchsen körperschallentkoppelt gelagert ist. Um ferner bei einer Betätigungsanordnung mit einem selbsthemmenden Schneckengetriebe ein durch die Wechselmomente der Steuerwelle angeregtes Geräusch zu vermeiden, wird die Schnecke nach Anspruch 3 axial beweglich angeordnet, und mit einem Stellmotor über eine drehelastische Wellenkupplung verbunden. Zur Minderung des Verschleißes des Stellgetriebes der Betätigungsanordnung wird nach Anspruch 4 bevorzugt zwischen dem Stellgetriebe und der Verstellanordnung eine drehelastische Verbindung vorgesehen. Hierfür ist neben einer gummielastischen Wellenkupplung ferner nach Anspruch 5 eine als Torsionsstab dienende Welle geeignet. Weiter kann im Hinblick auf niedrige Antriebsleistung in der Betätigungsanordnung sowie einer geringeren Körperschallabstrahlung durch die Betätigungsanordnung die Verstellanordnung vom Antrieb der Steuerwelle durch die Kurbelwelle durch eine gummielastische oder elastomere Zwischenlage entkoppelt sein. Eine derartige Anordnung ist vorteilhafterweise nach Anspruch 6 bei einer als Planetengetriebe ausgebildeten Verstellanordnung zu verwirklichen, dessen Hohlrad über die Zwischenlage eine Außenverzahnung für den Antrieb der Steuerwelle umfaßt. Eine derartige Zwischenlage

4

ist nach Anspruch 7 jedoch auch innerhalb des Planetengetriebes an einem der Getriebeelemente denkbar, wobei ein Zahnkranz über eine elastisch nachgiebige Zentrierung mit dem übrigen Radkörper in Verbindung steht. Diese Anordnung kann für sich oder aber auch in Verbindung mit anderen Anordnungen in der Vorrichtung zur relativen Drehlagenänderung der Steuerwelle vorgesehen sein. Schließlich kann nach Anspruch 8 das Planetengetriebe über eines seiner Elemente mit der Steuerwelle drehelastisch verbunden sein.

Die Erfindung ist anhand von in der Zeichnung dargestellten Ausführungsbeispielen beschrieben. Es zeigen:

Fig. 1,2    jeweils eine Verstellvorrichtung im Halbschnitt, wobei die Betätigungsanordnung als eine Baueinheit an einem Deckel des Gehäuses angeordnet ist,

Fig. 3    eine weitere Verstellvorrichtung im Halbschnitt, wobei die Betätigungsanordnung in einer von einem Deckel begrenzten Kammer für den Antrieb der Steuerwelle am Deckel angeordnet ist.

In einem teilweise dargestellten Gehäuse 1 einer nicht näher gezeigten Brennkraftmaschine ist eine Steuerwelle 2 zur Betätigung von nicht gezeigten Gaswechselventilen gelagert. Die Steuerwelle 2 wird über ein Antriebsrad 3 von einer nicht gezeigten Kurbelwelle der Brennkraftmaschine angetrieben. Zwischen dem Antriebsrad 3 und der Steuerwelle 2 ist eine Verstellanordnung 4 vorgesehen, die zur Drehlagenänderung der Steuerwelle 2 relativ zur Kurbelwelle dient. Die Verstellanordnung 4 umfaßt ein Planetengetriebe 5 mit einem Hohlrad 6, das mit dem Antriebsrad 3 in drehfester Verbindung steht. Das Hohlrad 6 weist ferner eine Innenverzahnung 7 auf zum Eingriff von Planetenrädern 8. Jedes Planetenrad 8 ist über einen Paßbolzen 9 in einem Träger 10 gelagert, wobei der Träger 10 mit einem Anschlußflansch 11 der Steuerwelle 2 drehfest verbunden ist. Weiter dient der Träger 10 zur zentrischen Lagerung des Hohlrades 6. Mit den Planetenrädern 8 kämmt ein Sonnenrad 12, das mit einer baulich gesonderten Betätigungsanordnung 13 in Wirkverbindung steht, wobei die Betätigungsanordnung 13 an einem Deckel 14 des Gehäuses 1 angeordnet ist. Die Betätigungsanordnung 13 umfaßt einen elektrischen Stellmotor 15 sowie ein aus einer Schnecke und einem Schneckenrad gebildetes selbsthemmendes Stellgetriebe 16. Der Stellmotor 15 und das Stellgetriebe 16 bilden mit dem Deckel 14 eine Baueinheit, in der das Sonnenrad 12 des Planetengetriebes 5 baulich integriert ist.

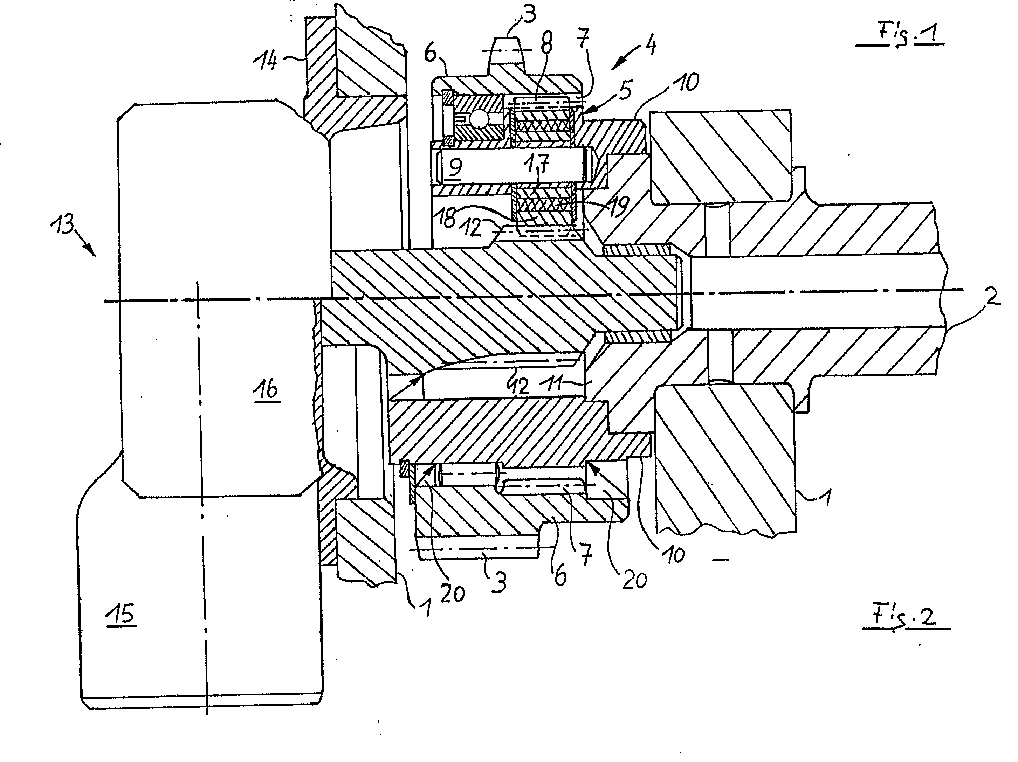

Die Befestigungsanordnung 13 ist an der Außenseite des Deckels 14 so getroffen, daß bei dessen Montage im Gehäuse 1 das Sonnenrad 12 mit der Achse der Steuerwelle 2 fluchtend mit den Planetenrädern 8 in Eingriff kommt. Durch diese Ausgestaltung der Betätigungsanordnung 13 hat diese selbst keinen Einfluß auf den Antrieb der Steuerwelle 2 von der Kurbelwelle, so daß herkömmliche Antriebe in vorteilhafter Weise Verwendung finden können. Fig. 1 zeigt hierfür das für den Eingriff einer Rollenkette gestaltete Antriebsrad 3. Um weiter die an der Steuerwelle 2 auftretenden Wechselmomente in ihren Spitzenwerten zu reduzieren und damit eine reduzierte Antriebsleistung für den elektrischen Stellmotor 15 zu erreichen, steht die Betätigungsanordnung 13 mit der Steuerwelle 2 in elastisch nachgiebiger Verbindung. Hierfür weist jedes Planetenrad 8 einen von einer Nabe 17 gesonderten Zahnkranz 18 auf, der mit der Nabe 17 durch eine Zentrierung 19 aus gummielastischem oder elastomerem Werkstoff verbunden ist. Volumen und Härte der elastisch nachgiebigen Zentrierung 19 sind so gewählt, daß neben einem bekannten Lastausgleich für das Planetengetriebe 5 auch eine wesentliche Dämpfung der Wechselmomente der Steuerwelle 2 zur Reduzierung des Antriebsmomentes erreicht ist. Mit dem reduzierten Antriebsmoment wird ein kleinbauender elektrischer Stellmotor 15 erreicht. Weiter ist mit der elastisch nachgiebigen Verbindung zwischen der Betätigungsanordnung 13 und der Steuerwelle 2 in Form der elastisch nachgiebigen Zentrierungen 19 in den Planetenrädern 8 auch eine Körperschallbrücke zwischen der Steuerwelle 2 und der Betätigungsanordnung 13 vermieden, so daß eine körperschallentkoppelte Anordnung erreicht ist.

In Fig. 2, in der mit der Fig. 1 übereinstimmende Bauteile gleichbenannt sind, ist das Antriebsrad 3 des Hohlrades 6 für den Eingriff eines Zahnriemens gestaltet. Um einen ölfreien Betrieb bei Verwendung eines Zahnriemens sicherzustellen, sind zwischen Hohlrad 6 und Träger 10 sowie zwischen diesem und dem Sonnenrad 12 Wellendichtungen 20 vorgesehen.

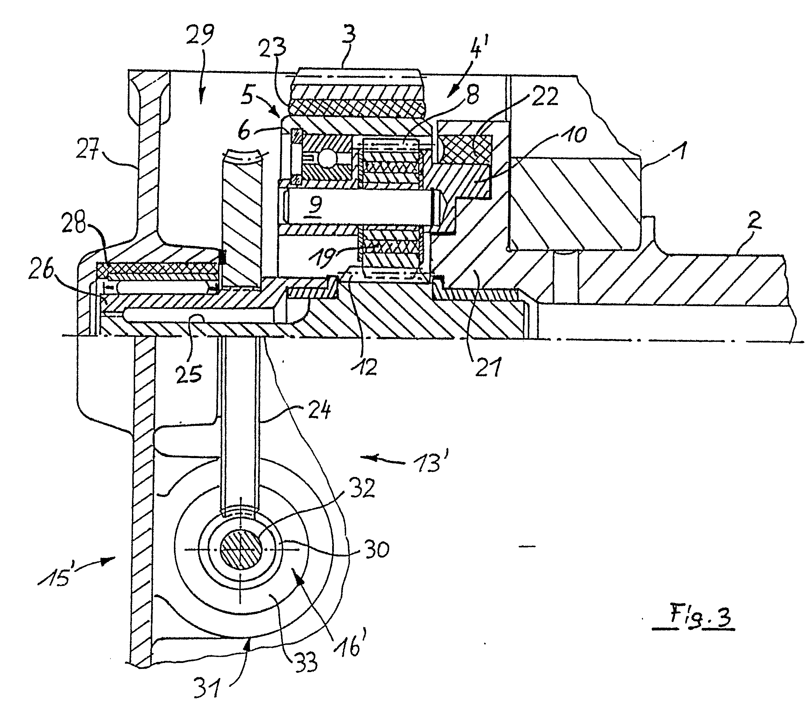

Das Ausführungsbeispiel nach Fig. 3, bei dem mit Fig. 1 übereinstimmende Bauteile gleichbenannt sind, zeigt weitere Möglichkeiten zur Reduzierung der Spitzenwerte der Wechselmomente der Steuerwelle 2. Die Steuerwelle 2 ist mit einem topfartigen Anschlußflansch 21 ausgebildet, der über gummielastische Kissen 22 mit dem Träger 10 für die Planetenräder 8 des Planetengetriebes 5 in drehelastischer Verbindung steht. Die Kissen 22 sind zwischen abwechselnd am Träger 10 und am Anschlußflansch 21 angeordneten, radialen Anschlägen positioniert. Weiter ist der Planeten-Träger 10 im Anschlußflansch 21 drehwinkelbeweglich zentriert. Bei einer Kombination der drehelastischen Verbindung mittels der Kissen 22 zwischen der Steuerwelle 2 und dem Planetengetriebe 5 kann die gummielastisch nachgiebige Zentrierung 19 in den Planetenrädern 8 durch metallelastische Zentrierhülsen ersetzt werden, die über eine vorbestimmte exzentrische Anordnung der Planetenräder 8 weiter zur Ausschaltung eines Zahnspieles dienen.

Weiter kann zur Verringerung der Einflüsse des Antriebes der Steuerwelle 2 von der Kurbelwelle her auf die Verstellanordnung 4' das steuerwellenseitige Antriebsrad 3 über eine gummielastische oder elastomere Zwischenlage 23 mit dem Hohlrad 6 verbunden sein.

In weiterer Ausgestaltung zur Reduzierung mechanischer Einflüsse auf die Betätigungsanordnung 13' kann zwischen dieser und der Verstellanordnung 4' eine drehelastische Verbindung vorgesehen werden. Als kompaktbauende drehelastische Verbindung ist zwischen dem Sonnenrad 12 des Planetengetriebes 5 und einem Schneckenrad 24 des Stellgetriebes 16' eine als Torsionsstab dienende Welle 25 vorgesehen. Mit der drehelastischen Welle 25 kann ferner ein Planetengetriebe 5 mit aus Kunststoff gefertigten Planetenrädern 8 kombiniert werden. Die Verwendung dieser Kombination bietet sich dann an, wenn in der Brennkraftmaschine für die gummielastischen Verbindungen zu aggressive Einflüsse vorliegen. Die Welle 25 steht an ihrem freien Ende in drehfester Verbindung mit einer Hülse 26, die in einem Deckel 27 des Gehäuses 1 der Brennkraftmaschine über eine Kunststoffbuchse 28 körperschallentkoppelt gelagert ist. Mit der Hülse 26 ist das Schneckenrad 24 des Stellantriebes 16' drehfest verbunden. Das in einer von dem Deckel 27 und der Stirnseite des Gehäuses 1 im wesentlichen umschlossener Kammer 29 zum Schutz des Antriebes der Steuerwelle 2 angeordnete Schneckenrad 24 kämmt mit einer Schnecke 30. Schneckenrad 24 und Schnecke 30 bilden ein selbsthemmendes Stellgetriebe 16', wodurch ein Nachregeln der jeweils gewählten Drehlage der Steuerwelle 2 durch einen in der Ausbuchtung 31 angeordneten elektrischen Stellmotor 15' weitestgehend vermieden ist. Zur Verringerung der Auswirkungen der mechanischen Einflüsse aus dem Antrieb der Steuerwelle 2 sowie der von der Steuerwelle 2 ausgehenden Wechselmomente ist die Schnecke 30 des selbsthemmenden Stellgetriebes 16' auf einer Welle 32 angeordnet, die relativ zum Stellmotor 15' axial beweglich angeordnet ist (nicht gezeigt) und mit dem Stellmotor 15' über eine drehelastische Wellenkupplung 33 in Verbindung steht.

Im Rahmen der Erfindung kann eine der vorbeschriebenen Verstellvorrichtungen auch zur relativen Drehlagenänderung einer Steuerwelle einer Einspritzpumpe für Diesel-Brennkraftmaschinen dienen.

Patentansprüche

1. Vorrichtung zur relativen Drehlagenänderung einer Steuerwelle, insbesondere von einer Kurbelwelle einer Brennkraftmaschine angetriebenen Steuerwelle, vor allem für Gaswechselventile,
- umfassend eine mit dem Antrieb (Antriebsrad 3) der Steuerwelle (2) kombinierte Verstellanordnung (4,4'),
- die mittels einer baulich gesonderten, am Gehäuse der Brennkraftmaschine angeordneten Betätigungsanordnung steuerbar ist,
dadurch gekennzeichnet,
- daß die Betätigungsanordnung (13,13') an einem Deckel (14,27) des Gehäuses (1) angeordnet ist und
- mit der Steuerwelle (2) und/oder dem Deckel in elastisch nachgiebiger Verbindung steht.

2. Vorrichtung nach Anspruch 1, wobei die Betätigungsanordnung (13,13') einen Stellmotor (15,15') und ein selbsthemmendes Stellgetriebe (16,16') umfaßt, dadurch gekennzeichnet, daß eine im Deckel (14,27) abgestützte Welle (Hülse 26) des Stellgetriebes (16,16') körperschallentkoppelt gelagert ist.

3. Vorrichtung nach Anspruch 1 oder 2, dadurch gekennzeichnet,
- daß das Stellgetriebe (16,16') eine relativ zum Stellmotor (15,15') axial beweglich angeordnete Schnecke (30) umfaßt,
- die mit dem Stellmotor über eine drehelastische Wellenkupplung (33) verbunden ist.

4. Vorrichtung nach einem oder mehreren der Ansprüche 1 - 3, dadurch gekennzeichnet, daß ein Schneckenrad (24) des Stellgetriebes (16,16') mit der Verstellanordnung (4,4') drehelastisch verbunden ist.

5. Vorrichtung nach einem oder mehreren der Ansprüche 1 - 4, dadurch gekennzeichnet,

- daß die Verstellanordnung (4,4') ein Planetengetriebe (5) umfaßt,

- wobei ein Sonnenrad (12) mit dem Schneckenrad (24) über eine als Torsionsstab dienende Welle (24) verbunden ist.

6. Vorrichtung nach einem oder mehreren der Ansprüche 1 - 5, dadurch gekennzeichnet,

- daß ein Hohlrad (6) des Planetengetriebes (5) der Verstellanordnung (4,4') eine Außenverzahnung (Antriebsrad 3) für den Antrieb der Steuerwelle (2) umfaßt,

- wobei die Außenverzahnung über eine gummielastische oder elastomere Zwischenlage (23) mit dem Hohlrad (6) verbunden ist.

7. Vorrichtung nach einem oder mehreren der Ansprüche 1 - 6, dadurch gekennzeichnet, daß ein Planetengetriebeelement (Planetenrad 8) einen mit dem übrigen Radkörper (Nabe 17) durch eine elastisch nachgiebige Zentrierung (19) verbundenen Zahnkranz (18) aufweist.

8. Vorrichtung nach einem oder mehreren der Ansprüche 1 - 7, dadurch gekennzeichnet, daß ein Planetengetriebeelement (Planetenrad-Träger 10) mit der Steuerwelle (2) drehelastisch (Kissen 22) verbunden ist.

9. Vorrichtung nach einem oder mehreren der Ansprüche 1 - 8, dadurch gekennzeichnet, daß in der über die als Torsionsstab dienende Welle (25) gesteuerten Verstellanordnung (4,4') ein Planetengetriebe (5) mit aus Kunststoff gebildeten Planetenrädern angeordnet ist.

10. Vorrichtung nach einem oder mehreren der Ansprüche 1 – 9,
dadurch gekennzeichnet,

- daß die aus Stellmotor (15,15') und Stellgetriebe (16,16')
gebildete Betätigungsanordnung (13,13') mit dem Deckel
(14,27) eine Baueinheit bildet,

- in der das Sonnenrad (12) des Planetengetriebes (5) der
Verstellanordnung (4,4') integriert sein kann.

Fig. 1

Fig. 2

0202682

Fig.3